# EUROPEAN PATENT APPLICATION

(11) **EP 2 234 345 A1**
(43) Date of publication of application: **29.09.2010**
(21) Application number: 09250812.6
(22) Date of filing: 23.03.2009
(51) Int. Cl.: H04L 12/56

(54) **Network devices**

(71) Applicant: BRITISH TELECOMMUNICATIONS public limited company, London EC1A 7AJ (GB)
(72) Inventor: The designation of the inventor has not yet been filed
(74) Representative: Roberts, Simon Christopher

(57) **Abstract**

A method performed in a first network (10), comprising a first network device (1) and a second network device (2), the first network (10) being linked to a second network (12) by a first link (18) between the second network device (2) and the second network (12) which provides a chosen route between the first network (10) and the second network (12). The method comprises determining, for example by the first network device (1), that the first network device (1) offers a back-up route between the first network (10) and the second network (12) via a second link (20) available between the first network device (1) and the second network (12). The method may comprise generating a back-up message (97) indicating the back-up route, and sending it to the second network device (2) which stores the message. Also described is use of the back-up route.

## Description

The present invention relates to network devices, e.g. routers and/or switches. The present invention relates in particular, but not exclusively, to such devices employed in an inter-network, e.g. in a multi-homed system.

A router typically operates within and between networks to perform the tasks of routing and forwarding information. In particular, a router typically selects a link along which to send network traffic, and forwards the network traffic along the selected link. For example, a router directs information to various paths on the Internet. One example of a router is the CISCO 7200 (trademark). A router discovers the links to use through the operation of a routing protocol where information is exchanged between routers.

A network or node is said to be multi-homed if it has a number of ways in which to connect to another network. Multi-homing is a technique to increase the reliability of a network connection. The different connections may be simultaneously available or one may be purely a back-up connection to be used if the primary connection fails. The routers within the network are responsible for determining the best connection to pass network traffic along.

Connections between networks may fail. Upon failure, there is a need to detect the failure and ensure that network traffic is directed along an alternative connection. It is desirable that this process happens quickly in order that network users are unaware of the failure.

Typically, the directing of network traffic to a working alternative connection requires that the routers within the network re-calculate a route upon which to send network traffic. This is a distributed calculation, known as convergence. Convergence can take many minutes to complete, during which time the multi-homed entity may be without connectivity. It is not uncommon for failures to have self-recovered before the convergence process is complete.

Also, during convergence, routing loops may occur. This may lead to information loss and/or delay. In such cases there is likely to be noticeable service disruption for the network users.

Techniques used to address these problems are known, for example fast re-route techniques. A fast re-route technique is used to locally compute a safe (e.g. loop free) path to a destination which avoids a failure. However, the computed path may not be optimal.

The way that fast re-route techniques can be implemented depends upon the routing protocol used in the network. For example, solutions for Multi Protocol Label Switching (MPLS) and Open Shortest Path First (OSPF) routing protocols are known. These routing protocols are used primarily in the intra-domain environment. Many networks, including for example the individual networks that make up the Internet, connect to each other using the Border Gateway Protocol (BGP). The BGP routing protocol operates in a different way to MPLS and OSPF protocols. Thus MPLS and OSPF fast re-route techniques do not provide a fast re-route solution to improve multi-homing resilience in networks connected through the BGP protocol (or other means when topology information is limited).

In a first aspect the present invention provides a method performed in a first network, the first network comprising a first network device and a second network device, the first network being at least initially linked to a second network by a first link that is available between the second network device and the second network, the first link providing a chosen route between the first network and the second network; the method comprising: determining that the first network device offers a back-up route between the first network and the second network via a second link that is available between the first network device and the second network.

The step of determining that the first network device offers a back-up route may be performed by the first network device itself.

The method may further comprise generating a back-up message indicating that the back-up route is offered. The method may further comprise sending the back-up message to the second network device.

The method may further comprise the first network device generating a back-up message indicating that it offers the back-up route. The method may further comprise the first network device sending the back-up message to the second network device.

The method may further comprise the step of storing the indication of the offered back-up route to provide a stored back-up route.

The method may further comprise the second network device storing the indication of the offered back-up route to provide a stored back-up route.

The method may further comprise the steps of determining that a route in addition to or instead of the chosen route is required; determining that the stored back-up route can fulfil this requirement; and in response to the step of determining that the stored back-up route can fulfil the requirement, directing network traffic between the first network and the second network via the first network device.

The method may further comprise the second network device determining that a route in addition to or instead of the chosen route is required; the second network device determining that the stored back-up route can fulfil this requirement; and in response to the step of determining that the stored back-up route can fulfil the requirement, the second network device directing network traffic between the first network and the second network via the first network device.

The method may further comprising sending a message from the second network device to the first network device informing the first network device that the back-up route is to be used.

The step of directing network traffic between the first network and the second network via the first network device may comprise tunnelling the network traffic between the second network device and the first network device.

The process of sending the back-up message from the first network device to the second network device may be carried out independently of any network traffic passing processes being implemented by the first network device and the second network device.

Network traffic passing processes may be implemented by the first network device and the second network device using the Border Gateway Protocol (BGP).

The first network device may determine that it offers the back-up route by comparing BGP route advertisements.

The first network device may determine that it offers the back-up route by checking if two data elements have the same single first network number in a first network path field.

The first network device may determine that it offers the back-up route by checking if two data elements both have a common default route.

The first network may further comprise at least one further network device in addition to the first network device and the second network device, and no network devices of the first network apart from the first network device and the second network device are informed that the first network device offers a back-up route for the second network device.

The step of determining that a route in addition to or instead of the chosen route is required may comprise determining that the chosen route has become unavailable and hence a route instead of the chosen route is required.

The step of determining that a route in addition to or instead of the chosen route is required may comprise determining that the chosen route has undergone soft or partial failure and hence a route in addition to the chosen route is required.

The step of the second network device determining that a route in addition to or instead of the chosen route is required may comprise the second network device determining that the chosen route has become unavailable and hence a route instead of the chosen route is required.

The step of the second network device determining that a route in addition to or instead of the chosen route is required may comprise the second network device determining that the chosen route has undergone soft or partial failure and hence a route in addition to the chosen route is required.

A management system may be informed of a failure event.

The first network device may be made aware that the back-up route is to be used by the second network device sending an out-of-band explicit message to the first network device.

The first network device may be made aware that the back-up route is to be used by the second network device sending an out-of-band implicit message to the first network device.

The first network device may be made aware that the back-up route is to be used by the second network device sending an in-band explicit message to the first network device.

The first network device may be made aware that the back-up route is to be used by the second network device sending an in-band implicit message to the first network device.

The first network device may be a router.

The first network device may be a switch.

The second network device may be a router.

The second network device may be a switch.

The at least one further network device may be a router.

The at least one further network device may be a switch.

The first network device and the second network device may be connected via Internal Border Gateway Protocol (iBGP) links.

The first network device and the second network device may be connected to each other by means of Open Shortest Path First (OSPF) processes.

The first link and/or the second link may be an External Border Gateway Protocol (eBGP) link.

An associated resource cost of a link may reflect the bandwidth of the link to be traversed.

The second link may have a higher associated resource cost than the first link.

The chosen route between the first network and the second network may be the best route between the first network and the second network. The best route may be the best route in terms of lowest associated resource cost.

In a further aspect the present invention provides a method performed by a first network device, the first network device being part of a first network that further comprises a second network device, the first network being at least initially linked to a second network by a first link that is available between the second network device and the second network, the first link providing a chosen route between the first network and the second network; the method comprising: the first network device determining that the first network device offers a back-up route between the first network and the second network via a second link that is available between the first network device and the second network.

The method may further comprise the first network device generating a back-up message indicating that it offers the back-up route. The method may further comprise the first network device sending the back-up message to the second network device.

The method may further comprise the step of storing the indication of the offered back-up route to provide a stored back-up route.

The method may further comprise the first network device receiving a message from the second network device informing the first network device that the back-up route is to be used.

The method may further comprise the first network device participating in directing network traffic between the first network and the second network via the first network device.

The directing of network traffic between the first network and the second network via the first network device may comprise tunnelling the network traffic between the second network device and the first network device.

The process of sending the back-up message from the first network device to the second network device may be carried out independently of any network traffic passing processes being implemented by the first network device.

Network traffic passing processes may be implemented by the first network device using the Border Gateway Protocol (BGP).

The first network device may determine that it offers the back-up route by comparing BGP route advertisements.

The first network device may determine that it offers the back-up route by checking if two data elements have the same single first network number in a first network path field.

The first network device may determine that it offers the back-up route by checking if two data elements both have a common default route.

A management system may be informed of a failure event.

The first network device may be made aware that the back-up route is to be used by receiving from the second network device an out-of-band explicit.

The first network device may be made aware that the back-up route is to be used by receiving from the second network device an out-of-band implicit message.

The first network device may be made aware that the back-up route is to be used by receiving from the second network device an in-band explicit message.

The first network device may be made aware that the back-up route is to be used by receiving from the second network device an in-band implicit message.

The first network device may be a router.

The first network device may be a switch.

The first network device and the second network device may be connected via Internal Border Gateway Protocol (iBGP) links.

The first network device and the second network device may be connected to each other by means of Open Shortest Path First (OSPF) processes.

The first link and/or the second link may be an External Border Gateway Protocol (eBGP) link.

An associated resource cost of a link may reflect the bandwidth of the link to be traversed.

The second link may have a higher associated resource cost than the first link.

The chosen route between the first network and the second network may be the best route between the first network and the second network. The best route may be the best route in terms of lowest associated resource cost.

In a further aspect the present invention provides a method performed by a second network device, the second network device being part of a first network that further comprises a first network device, the first network being at least initially linked to a second network by a first link that is available between the second network device and the second network, the first link providing a chosen route between the first network and the second network; the method comprising: the second network device storing an indication of an offered back-up route to provide a stored back-up route in response to receiving, from the first network device, a back-up message indicating that the first network device offers the back-up route between the first network and the second network via a second link that is available between the first network device and the second network.

The method may further comprise the second network device determining that a route in addition to or instead of the chosen route is required; the second network device determining that the stored back-up route can fulfil this requirement; and in response to the step of determining that the stored back-up route can fulfil the requirement, the second network device directing network traffic between the first network and the second network via the first network device.

The method may further comprising the second network device sending a message to the first network device informing the first network device that the back-up route is to be used.

The step of directing network traffic between the first network and the second network via the first network device may comprise tunnelling the network traffic between the second network device and the first network device.

The back-up message may be received from the first network device independently of any network traffic passing processes being implemented by the first network device and the second network device.

Network traffic passing processes may be implemented by the second network device using the Border Gateway Protocol, BGP.

The step of the second network device determining that a route in addition to or instead of the chosen route is required may comprise the second network device determining that the chosen route has become unavailable and hence a route instead of the chosen route is required.

The step of the second network device determining that a route in addition to or instead of the chosen route is required may comprise the second network device determining that the chosen route has undergone soft or partial failure and hence a route in addition to the chosen route is required.

The second network device may inform a management system of a failure event.

The second network device may make the first network device aware that the back-up route is to be used by sending an out-of-band explicit message to the first network device.

The second network device may make the first network device aware that the back-up route is to be used by sending an out-of-band implicit message to the first network device.

The second network device may make the first network device aware that the back-up route is to be used by sending an in-band explicit message to the first network device.

The second network device may make the first network device aware that the back-up route is to be used by sending an in-band implicit message to the first network device.

The second network device may be a router.

The second network device may be a switch.

The first network device and the second network device may be connected via Internal Border Gateway Protocol (iBGP) links.

The first network device and the second network device may be connected to each other by means of Open Shortest Path First (OSPF) processes.

The first link and/or the second link may be an External Border Gateway Protocol (eBGP) link.

An associated resource cost of a link may reflect the bandwidth of the link to be traversed.

The second link may have a higher associated resource cost than the first link.

The chosen route between the first network and the second network may be the best route between the first network and the second network. The best route may be the best route in terms of lowest associated resource cost.

In a further aspect the present invention provides a first network device for use in a first network, the first network further comprising a second network device and being at least initially linked to a second network by a first link that is available between the second network device and the second network, the first link providing a chosen route between the first network and the second network; the first network device comprising means for determining that the first network device offers a back-up route between the first network and the second network via a second link that is available between the first network device and the second network.

The first network device may further comprise means for generating a back-up message indicating that the back-up route is offered. The first network device may further comprise means for sending the back-up message to the second network device.

The first network device may comprise means for participating in directing network traffic between the first network and the second network via the first network device.

The first network device may further comprising means to receive a message from the second network device informing the first network device that the back-up route is to be used.

The means for directing network traffic between the first network and the second network via the first network device may comprise means for tunnelling the network traffic between the second network device and the first network device.

The means for sending the back-up message from the first network device to the second network device may carry out the sending independently of any network traffic passing processes being implemented by the first network device and the second network device.

Network traffic passing processes may be implemented by the first network device using the Border Gateway Protocol (BGP).

The first network device may comprise receiving means for being made aware that the back-up route is to be used by receiving from the second network device an out-of-band explicit message.

The first network device may comprise receiving means for being made aware that the back-up route is to be used by receiving from the second network device an out-of-band implicit message.

The first network device may comprise receiving means for being made aware that the back-up route is to be used by receiving from the second network device an in-band explicit message.

The first network device may comprise receiving means for being made aware that the back-up route is to be used by receiving from the second network device an in-band implicit message.

The first network device may be a router.

The first network device may be a switch.

The first network device and.the second network device may be connected via Internal Border Gateway Protocol (iBGP) links.

The first network device may determine that it offers the back-up route by comparing BGP route advertisements.

The first network device may determine that it offers the back-up route by checking if two data elements have the same single first network number in a first network path field.

The first network device may determine that it offers the back-up route by checking if two data elements both have a common default route.

The first network device and the second network device may be connected to each other by means of Open Shortest Path First (OSPF) processes.

The first link and/or the second link may be an External Border Gateway Protocol (eBGP) link.

An associated resource cost of a link may reflect the bandwidth of the link to be traversed.

The second link may have a higher associated resource cost than the first link.

The chosen route between the first network and the second network may be the best route between the first network and the second network. The best route may be the best route in terms of lowest associated resource cost.

In a further aspect the present invention provides a second network device for use in a first network, the first network further comprising a first network device and being at least initially linked to a second network by a first link that is available between the second network device and the second network, the first link providing a chosen route between the first network and the second network; the second network device comprising means for storing an indication of an offered back-up route to provide a stored back-up route in response to receiving, from the first network device, a back-up message indicating that the first network device offers the back-up route between the first network and the second network via a second link that is available between the first network device and the second network.

The second network device may further comprise means for determining that a route in addition to or instead of the chosen route is required; means for determining that the stored back-up route can fulfil this requirement; and means for, in response to the step of determining that the stored back-up route can fulfil the requirement, directing network traffic between the first network and the second network via the first network device.

The second network device may further comprise means to send a message to the first network device informing the first network device that the back-up route is to be used.

The step of directing network traffic between the first network and the second network via the first network device may comprise tunnelling the network traffic between the second network device and the first network device.

The back-up message may be received from the first network device independently of any network traffic passing processes being implemented by the first network device and the second network device.

Network traffic passing processes may be implemented by the second network device using the Border Gateway Protocol (BGP).

The second network device may comprise means for determining that the chosen route has become unavailable and hence a route instead of the chosen route is required.

The second network device may comprise means for determining that the chosen route has undergone soft or partial failure and hence a route in addition to the chosen route is required.

The second network device may comprise means for sending an out-of-band explicit message to the first network device to make the first network device aware that the back-up route is to be used.

The second network device may comprise means for sending an out-of-band implicit message to the first network device to make the first network device aware that the back-up route is to be used.

The second network device may comprise means for sending an in-band explicit message to the first network device to make the first network device aware that the back-up route is to be used.

The second network device may comprise means for sending an in-band implicit message to the first network device to make the first network device aware that the back-up route is to be used.

The second network device may be a router.

The second network device may be a switch.

The first network device and the second network device may be connected via Internal Border Gateway Protocol (iBGP) links.

The first network device and the second network device may be connected to each other by means of Open Shortest Path First (OSPF) processes.

The first link and/or the second link may be an External Border Gateway Protocol (eBGP) link.

An associated resource cost of a link may reflect the bandwidth of the link to be traversed.

The second link may have a higher associated resource cost than the first link.

The chosen route between the first network and the second network may be the best route between the first network and the second network. The best route may be the best route in terms of lowest associated resource cost.

In a further aspect the present invention provides a first network, comprising: any above described first network device; and any above described second network device.

The first network may further comprise at least one further network device in addition to the first network device and the second network device, and no network devices of the first network apart from the first network device and the second network device are informed that the first network device offers a back-up route for the second network device.

The at least one further network device may be a router.

The at least one further network device may be a switch.

Embodiments of the invention will now be described, by way of example only, with reference to the accompanying drawings, in which:
Figure 1 is a block diagram schematically showing an inter-network of networks in which a first embodiment of the invention is implemented;
Figure 2 is a logical representation of a BGP routing system for a router;
Figure 3 is a logical representation of a BGP routing system for another router;
Figure 4 is a process flow chart showing certain steps of an UPDATE message and back-up message passing process; and
Figure 5 is a process flow chart showing certain steps of an example of a process of rerouting network traffic in response to best route connectivity failure

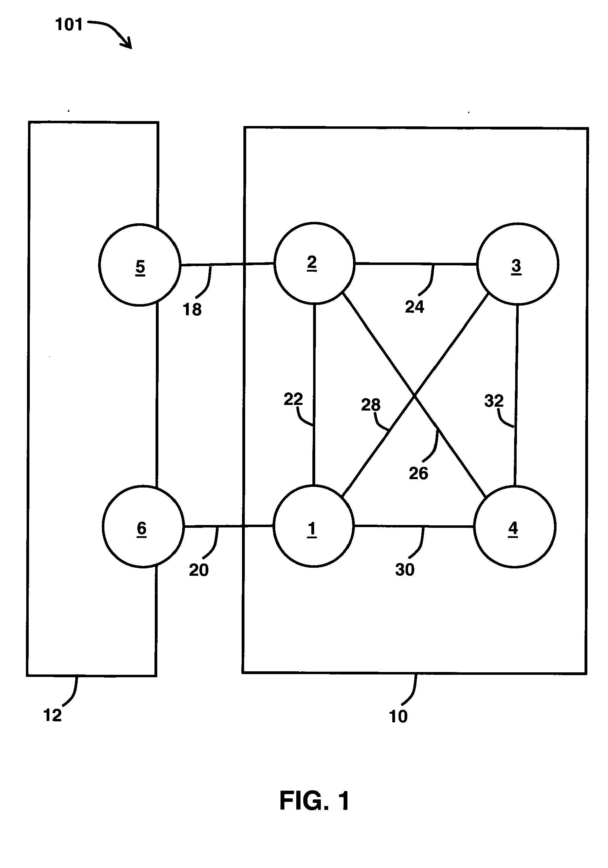

Figure 1 is a block diagram schematically showing an inter-network 101 in which a first embodiment of the invention is implemented. In practical examples, the inter-network 101 will typically comprise a large number of routers. However, for ease of explanation, the inter-network 101 will be described in terms of only six routers, namely a first router 1, a second router 2, a third router 3, a fourth router 4, a fifth router 5, and a sixth router 6.

The inter-network 101 comprises a first network 10 and a second network 12. The first network 10 and the second network 12 are two independently managed networks.

The first network 10 comprises the first router 1, the second router 2, the third router 3, and the fourth router 4.

The second network 12 comprises the fifth router 5 and the sixth router 6. The second network 12 has a common IP address prefix. This common IP address prefix is advertised using the BGP protocol to both the first routers 1 and the second router 2 i.e. the first network 10 is aware that the fifth router 5 and the sixth router 6 provide two different gateways to the network prefix advertised by the second network 12.

The first network 10 is connected to the second network 12. In particular, the second router 2 is connected to the fifth router 5. Also, the first router 1 is connected to the sixth router 6. Thus, the first network 10 and the second network 12 are multi-homed systems, i.e. the first network 10 connects to the second network 12 in more than one way, and vice versa.

The second router 2 is connected to the fifth router 5 via a simple point to point link 18, hereinafter referred to as "the first external link", between the second router 2 and the fifth router 5. Over the first external link 18 an eBGP session is maintained. The first external link 18 has a preference associated with it - in this example this is a resource "cost" which may reflect, amongst other things, the cost or bandwidth of the link or the autonomous system (AS) path to be traversed. The cost is not explicitly expressed within BGP protocol although mechanisms exist to influence peers understanding the "cost" through BGP parameters such as Local Preference. The cost associated with the first external link 18 may change over time. This may be the result of many things. For example the cost may change regularly (time of day) or as a result of network upgrades.

The first router 1 is connected to the sixth router 6 via a simple point to point link, link 20, hereinafter referred to as "the second external link", between the first router 1 and the sixth router 6. Over the second external link 20 an eBGP session is maintained. The second external link 20 has a preference associated with it - in this example this is a resource "cost" which may reflect, amongst other things, the cost or bandwidth of the link or the AS path to be traversed. The cost is not explicitly expressed within BGP protocol although mechanisms exist to influence peers understanding the "cost" through BGP parameters such as Local Preference. The cost associated with the second external link 20 may change over time. This may be the result of many things. For example the cost may change regularly (time of day) or it may be a result of network upgrades.

In this example, the cost associated with the first external link to reach the specified prefix is less than the cost associated with the second external link, i.e. the cost of the route to the second network 12 offered by the second router 2 is less than the sum of the costs of the route to the second network 12 offered by the first router 1 and any additional costs in transmitting the data from the first router 1 to the second router 2. Therefore, in this specific example, under normal circumstances, both the first and second networks will attempt to direct all traffic between them over the first external link 18.

Each router of the first network 10, i.e. each of the first router 1, the second router 2, the third router 3, and the fourth router 4, is logically connected to every other router of the first network 10. Specifically, the first router 1, the second router 2, the third router 3, and the fourth router 4 are configured in a full mesh of iBGP protocol sessions, i.e. each router is configured to act as a peer to every other router. In particular, the first router 1, the second router 2, the third router 3, and the fourth router 4 are connected in the following ways.

The second router 2 is connected to the first router 1 by means of OSPF processes which run on the first router 1 and the second router 2 and on any additional routers that may be needed to physically connect the first router 1 to the second router 2 (these additional routers are not shown). These OSPF processes work together to provide a logical link 22, hereinafter referred to as "the first internal link", between the first router 1 and the second router 2. Over the first internal link 22 an iBGP session is maintained. The second router 2 is connected to the third router 3 by means of OSPF processes which run on the second router 2 and the third router 3 and on any additional routers that may be needed to physically connect the second router 2 to the third router 3 (these additional routers are not shown). These OSPF processes work together to provide a logical link 24, hereinafter referred to as "the second internal link" between the second router 2 and the third router 3. Over the second internal link 24 an iBGP session is maintained. The second router 2 is connected to the fourth router 4 by means of OSPF processes which run on the second router 2 and the fourth router 4 and on any additional routers that may be needed to physically connect the second router 2 to the fourth router 4 (these additional routers are not shown). These OSPF processes work together to provide a logical link 26, hereinafter referred to as "the third internal link", between the second router 2 and the fourth router 4. Over the third internal link 26 an iBGP session is maintained.

The first, second and third internal links each have an associated preference - in this example this is a resource "cost" which may reflect, amongst other things, the cost or bandwidth of the link. The cost is not explicitly expressed within BGP protocol although mechanisms exist to influence peers understanding the "cost" through BGP parameters such as Local Preference. Each of the first, second and third internal links may change over time, for example, if one or more of the individual OPSF routers making up one or more of the links become inactive. Thus, the costs associated with each of the first, second and third internal links may change over time. Information about the prefixes learnt in the BGP system may be passed into the OSPF system, or alternative means may be employed to ensure routing of traffic to external destinations. The OSPF network simply provides connectivity between the BGP-speaking devices. There are costs associated with this logical connectivity provided by the OSPF processes that may change over time. These costs changing may result in the BGP decision process also changing.

In addition to being connected to the second router 2 by the first internal link 22, the first router 1 is further connected as follows. The first router 1 is connected to the third router 3 by means of OSPF processes which run on the first router 1 and the third router 3 and on any additional routers that may be needed to physically connect the first router 1 to the third router 3 (these additional routers are not shown). These OSPF processes work together to provide a logical link 28, hereinafter referred to as "the fourth internal link", between the first router 1 and the third router 3. Over the fourth internal link 28 an iBGP session is maintained. The first router 1 is connected to the fourth router 4 by means of OSPF processes which run on the first router 1 and the fourth router 4 and on any additional routers that may be needed to physically connect the first router 1 to the fourth router 4 (these additional routers are not shown). These OSPF processes work together to provide a logical link 30, hereinafter referred to as "the fifth internal link", between the first router 1 and the fourth router 4. Over the fifth internal link 30 an iBGP session is maintained.

The fourth and fifth internal links each have an associated preference - in this example this is a resource "cost" which may reflect, amongst other things, the cost or bandwidth of the link. The cost is not explicitly expressed within BGP protocol although mechanisms exist to influence peers understanding the "cost" through BGP parameters such as Local Preference. Each of the fourth and fifth internal links may change over time, for example, if one or more of the individual OPSF routers making up one or more of the links become inactive. Thus, the costs associated with each of the fourth and fifth internal links may change over time. Information about the prefixes learnt in the BGP system may be passed into the OSPF system, or alternative means can be found to ensure routing of traffic to external destinations. The OSPF network simply provides connectivity between the BGP speaking devices. There are costs associated with this logical connectivity provided by the OSPF processes that may change over time. These costs changing may result in the BGP decision process also changing.

In addition to being connected to the second router 2 and the first router 1 as described above, the third router 3 is connected to the fourth router 4 by means of OSPF processes which run on the third router 3 and the fourth router 4 and on any additional routers that may be needed to physically connect the third router 3 to the fourth router 4 (these additional routers are not shown). These OSPF processes work together to provide a logical link 32, hereinafter referred to as "the sixth internal link", between the third router 3 and the fourth router 4. Over the sixth internal link 32, an iBGP session is maintained.

The sixth internal link 32 has an associated preference - in this example this is a resource "cost" which may reflect, amongst other things, the cost or bandwidth of the link. The cost is not explicitly expressed within BGP protocol although mechanisms exist to influence peers understanding the "cost" through BGP parameters such as Local Preference. The sixth internal link 32 may change over time, for example, if one or more of the individual OPSF routers making up the link become inactive. Thus, the costs associated with the sixth internal link 32 may change over time. Information about the prefixes learnt in the BGP system may be passed into the OSPF system, or alternative means can be found to ensure routing of traffic to external destinations. The OSPF network simply provides connectivity between the BGP speaking devices. There are costs associated with this logical connectivity provided by the OSPF processes that may change over time. These costs changing may result in the BGP decision process also changing.

The fifth and sixth routers 5, 6 of the second network 12 communicate with each other in conventional fashion. For example, the fifth and sixth routers 5, 6 of the second network 12 communicate by means of OSPF processes which run on the fifth router 5 and the sixth router 6 and on any additional routers that may be needed to physically connect the fifth router 5 to the sixth router 6 (these additional routers are not shown).

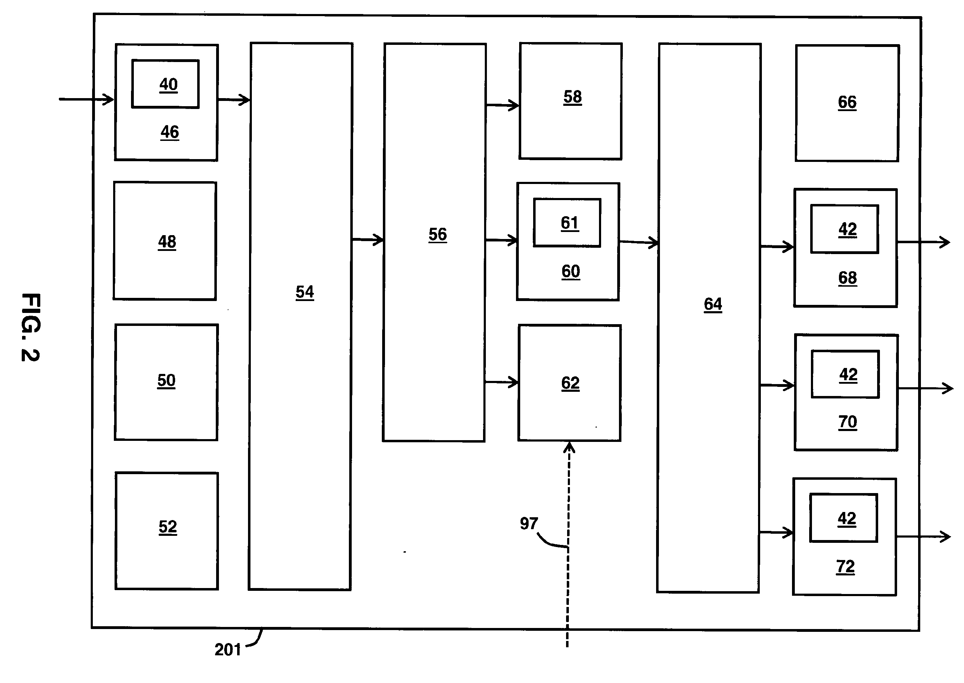

In this example, during operation, each of the routers 1-4 of the first network 10 route data traffic to the second network 12 via either the first router 1 or the second router 2. The way in which it is determined as to which of the two routers is chosen will be described in more detail below with reference to Figures 2-5.

In this example, during operation, the routers 1-4 of the first network 10 exchange, using the iBGP protocol, UPDATE messages about destinations to which an individual router offers connectivity. An UPDATE message comprises Network Layer Reachability Information (NLRI). NLRI includes, for example, a prefix of a destination reachable by the router transmitting the UPDATE message and other information, e.g. the first router 1 and the second router 2 may send UPDATE messages containing the common IP address prefix of the second network 12 and the AS path traversed in reaching that prefix. BGP routers incrementally transmit new UPDATE messages announcing, for example, new prefixes to which they offer connectivity, and also withdrawing prefixes to which the router no longer offers connectivity.

Figure 2 is a logical representation of a routing system 201 for the second router 2, hereinafter referred to as the "first routing system". The first routing system 201 is of a format well known to the skilled person, and shown for example in Figure 6-9 of "*Internet Routing Architectures*", Halabi. S., which book is incorporated herein by reference. The first routing system 201 shows the input, processing, and output of UPDATE messages through the second router 2. The various tables, processers, generators and engines shown in the first routing system 201 of Figure 2 are not usually visible to other BGP routers.

The first routing system 201 comprises a first Adjacent Routing Information Base (Incoming) 46, hereinafter referred to as the "first Adj-RIB-In"; a second Adjacent Routing Information Base (Incoming) 48, hereinafter referred to as the "second Adj-RIB-In"; a third Adjacent Routing Information Base (Incoming) 50, hereinafter referred to as the "third Adj-RIB-In"; a fourth Adjacent Routing Information Base (Incoming) 52, hereinafter referred to as the "fourth Adj-RIB-In"; a first input policy engine 54; a first BGP decision processer 56; a first route store 58; a first Local routing information Base 60, hereinafter referred to as the "first Loc-RIB"; a first output policy engine 64; a first backup system 62; a first Adjacent Routing Information Base (Outgoing) 66, hereinafter referred to as the "first Adj-RIB-Out"; a second Adjacent Routing Information Base (Outgoing) 68, hereinafter referred to as the "second Adj-RIB- Out"; a third Adjacent Routing Information Base (Outgoing) 70, hereinafter referred to as the "third Adj-RIB- Out"; and a fourth Adjacent Routing Information Base (Outgoing) 72, hereinafter referred to as the "fourth Adj-RIB- Out".

The first Adj-RIB-In 46 receives a first UPDATE message 40. The first UPDATE message 40 is received from the fifth router 5. In this example, the first UPDATE message 40 is received from the fifth router 5 via the first external link 18. The first UPDATE message 40 comprises a prefix to which the fifth router 5 offers connectivity, and associated parameters such as a traversed path and a cost associated with this connection. In this example, the first UPDATE message 40 comprises the prefix of the second network 12 and the preference that the fifth router 5 wishes to communicate to the second router 2 that reflects the cost associated with reaching the second network from the second router 2, i.e. the cost associated with the first external link 18 from the point of view of the fifth router 5. The prefix of the second network 12 and the associated cost are stored in the first Adj-RIB-In 46. The prefix of the second network 12 and the associated parameters are passed from the first Adj-RIB-In 46 to the first input policy engine 54.

The second Adj-RIB-In 48 is for receiving UPDATE messages from the first router 1. In this example the second router 2 does not receive an UPDATE message from the first router 1.

The third Adj-RIB-In 50 is for receiving UPDATE messages from the third router 3. In this example the second router 2 does not receive an UPDATE message from the third router 3.

The fourth Adj-RIB-In 52 is for receiving UPDATE messages from the fourth router 4. In this example the second router 2 does not receive an UPDATE message from the fourth router 4.

The first input policy engine 54 receives the first UPDATE message 40, i.e. the prefix of the second network 12 and the associated parameters, such as the cost, from the first Adj-RIB-In 46. The first input policy engine 54 applies policies configured by an operator to incoming information. For example, the first input policy engine 54 performs route filtering and attribute manipulation on the received information, i.e. the first input policy engine 54 manipulates received routes and costs in order to influence which routes are used by the second router 2 to a given destination, i.e. the second network 12. The first input policy engine 54 passes this processed information to the first BGP decision processer 56. The first BGP decision processer 56 determines the best route to a given destination. The first BGP decision processer 56 determines the best route for network traffic received at the second router 2 to take in order to reach the second network 12. In this example, the first BGP decision processer 56 determines that the best route to the second network 12 is the route detailed in the first UPDATE message 40, i.e. the route between the second router 2 and the fifth router 5. This best route and its associated cost 61 are passed from the first BGP decision processer 56 to the first Loc-RIB 60, i.e. the prefix of the second network 12 and the associated parameters, such as the cost of reaching the second network 12 from the second router 2, are sent to the first Loc-RIB 60. Other potential routes to the second network and any associated parameters are sent from the first BGP decision processer 56 to the first route store 58. In this example, there are no such other potential routes. The first BGP decision processer 56 passes all received routes to the first backup system 62.

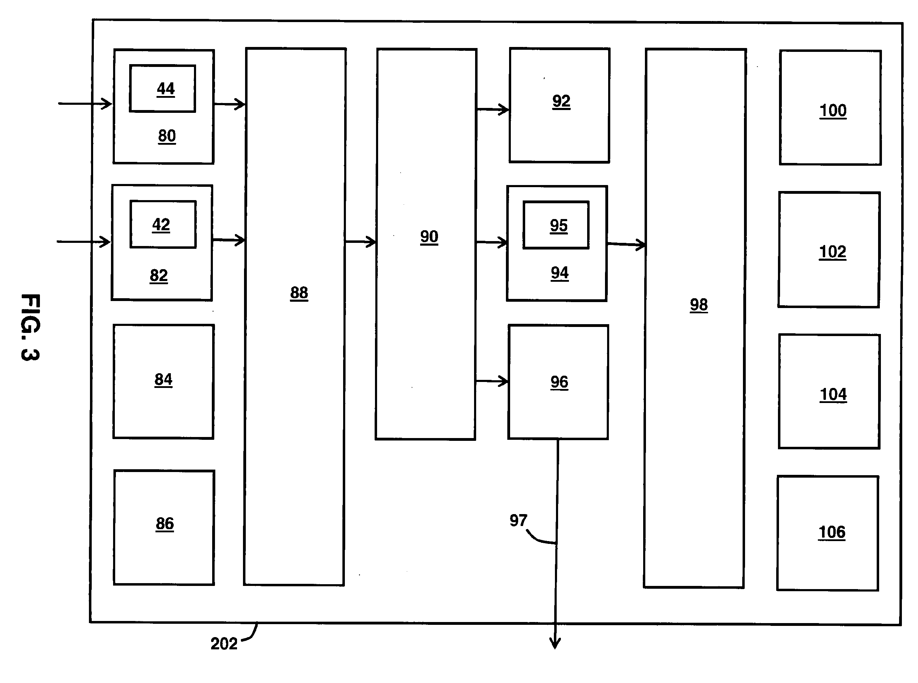

The first back-up system 62 is coupled to the first BGP decision processer 56. The first back-up system is adapted to receive a back-up message 97. The function of the first back-up system 62 and the back-up message 97 will be described below with reference to Figures 3-5 for a second back-up system 96 of a second routing system 202 and a back-up message 97.

The best route and its associated cost 61, i.e. the prefix of the second network 12 and the associated parameters received from the first BGP decision processer 56 are stored in the first Loc-RIB 60. The first Loc-RIB 60 is separate from the first route store 58 and contains all the routes and associated parameters that the second router 2 could advertise to its peers. The first Loc-RIB 60 passes the best route 61 to the first output policy engine 64.

The first output policy engine 64 receives best route and its associated cost 61 from the first Loc-RIB 60. The first output policy engine 64 applies policies configured by an operator to incoming information. For example, the first output policy engine 64 performs route filtering and attribute manipulation on the received information, i.e. the first output policy engine 64 manipulates the received route and cost in order to, if required, differentiate the information it sends to the peers of the second router 2. The first output policy engine 64 passes the processed best route information to the Adj-RIB-Outs of the peer routers of the second router 2. In this example the first output policy engine 64 passes the processed best route information to the second Adj-RIB-Out 68, the third Adj-RIB-Out 70 and the fourth Adj-RIB-Out 72.

The first Adj-RIB-Out 66 stores the processed UPDATE information the first output policy engine 64 that is to be advertised to the fifth router 5. In this example, there is no UPDATE information to be advertised to the fifth router 5.

The second Adj-RIB-Out 68 stores the processed best route information received from the first output policy engine 64. In this example, the processed best route information received from the first output policy engine 64 is a second UPDATE message 42. The second UPDATE message 42 comprises the prefix used by the second network 12, a next hop identifier which identifies the next hop along the route to the second network, and associated parameters such as the cost of the route. In this example, the next hop identifier identifies the next hop as the second router 2. The second UPDATE message 42 is sent from the second router 2 to the first router 1. In this example, the second UPDATE message 42 is sent from the second router 2 to the first router 1 via the first internal link 22.

The third Adj-RIB-Out 70 stores the processed best route information received from the first output policy engine 64. In this example, the processed best route information received from the first output policy engine 64 is a second UPDATE message 42. The second UPDATE message 42 comprises the prefix used by the second network 12, a next hop identifier which identifies the next hop along the route to the second network, and associated parameters such as the cost of the route. In this example, the next hop identifier identifies the next hop as the second router 2. The second UPDATE message 42 is sent from the second router 2 to the third router 3. In this example, the second UPDATE message 42 is sent from the second router 2 to the third router 3 via the second internal link 24.

The fourth Adj-RIB-Out 72 stores the processed best route information received from the first output policy engine 64. In this example, the processed best route information received from the first output policy engine 64 is a second UPDATE message 42. The second UPDATE message 42 comprises the prefix used by the second network 12, a next hop identifier which identifies the next hop along the route to the second network, and associated parameters such as the cost of the route. In this example, the next hop identifier identifies the next hop as the second router 2. The second UPDATE message 42 is sent from the second router 2 to the fourth router 4. In this example, the second UPDATE message 42 is sent from the second router 2 to the fourth router 4 via the third internal link 26.

Figure 3 is a logical representation of a routing system 202 for the first router 1, hereinafter referred to as the "second routing system". In this example, Figure 3 shows the second routing system 202 after it has been updated in response to the information received from the first routing system 201 of the second router 2 as described above with reference to Figure 2. The second routing system 202 is of a format well known to the skilled person, and shown for example in Figure 6-9 of "*Internet Routing Architectures*", Halabi. S. The second routing system 202 shows the input, processing, and output of UPDATE messages through the first router 1. The various tables, processers, generators and engines shown in the second routing system 202 are not usually visible to other BGP routers.

The second routing system 202 comprises a fifth Adjacent Routing Information Base (Incoming) 80, hereinafter referred to as the "fifth Adj-RIB-In"; a sixth Adjacent Routing Information Base (Incoming) 82, hereinafter referred to as the "sixth Adj-RIB-In"; a seventh Adjacent Routing Information Base (Incoming) 84, hereinafter referred to as the "seventh Adj-RIB-In"; an eighth Adjacent Routing Information Base (Incoming) 86, hereinafter referred to as the "eighth Adj-RIB-In"; a second input policy engine 88; a second BGP decision processer 90; a second route store 92; a second Local routing information Base 94, hereinafter referred to as the "second Loc-RIB"; a second output policy engine 98; a fifth Adjacent Routing Information Base (Outgoing) 100, hereinafter referred to as the "fifth Adj-RIB- Out"; a sixth Adjacent Routing Information Base (Outgoing) 102, hereinafter referred to as the "sixth Adj-RIB- Out"; a seventh Adjacent Routing Information Base (Outgoing) 104, hereinafter referred to as the "seventh Adj-RIB-Out"; and an eighth Adjacent Routing Information Base (Outgoing) 106, hereinafter referred to as the "eighth Adj-RIB-Out".

The fifth Adj-RIB-In 80 receives a third UPDATE message 44. The third UPDATE message 44 is received from the sixth router 6. In this example, the third UPDATE message 44 is received from the sixth router 6 via the second external link 20. The third UPDATE message 44 comprises a prefix to which the sixth router 6 offers connectivity, associated parameters such as a traversed path, and the preference that the sixth router 6 wishes to communicate to the first router 1 that reflects cost associated with this connection. In this example, the third UPDATE message 44 comprises the prefix of the second network 12 and the cost associated with reaching the second network 12 from the first router 1, i.e. the cost associated with the second external link 20 from the point of view of the sixth router 6. The prefix of the second network 12 and the associated parameters, such as the cost, are stored in the fifth Adj-RIB-In 80. The prefix of the second network 12 and the associated parameters are passed from the fifth Adj-RIB-In 80 to the second input policy engine 88.

The sixth Adj-RIB-In 82 receives the second UPDATE message 42. The second UPDATE message 42 is received from the second router 2. In this example, the second UPDATE message 42 is received from the second router 2 after being sent from the second router 2 to the first router 1 as described above with reference to Figure 2. In this example, the second UPDATE message 42 is received from the second router 2 via the first internal link 22. As described above, the second UPDATE message 42 comprises the prefix used by the second network 12, a next hop identifier which identifies the second router 2, and associated parameters such as the cost of the route. The prefix used by the second network 12, the next hop identifier which identifies the second router 2, and the associated parameters are stored in the sixth Adj-RIB-In 84. The prefix used by the second network 12, the next hop identifier which identifies the second router 2, and the associated parameters are passed from the sixth Adj-RIB-In 82 to the second input policy engine 88.

The seventh Adj-RIB-In 84 is for receiving UPDATE messages from the third router 3. In this example the first router 1 does not receive an UPDATE message from the third router 3.

The eighth Adj-RIB-In 86 is for receiving UPDATE messages from the fourth router 4. In this example the second router 2 does not receive an UPDATE message from the fourth router 4.

The second input policy engine 88 receives the third UPDATE message 44 from the fifth Adj-RIB-In 80 and the second UPDATE message 42 from the sixth Adj-RIB-In 82. The second input policy engine 88 applies policies configured by an operator to incoming information. For example, the second input policy engine 88 performs route filtering and attribute manipulation on the received information, i.e. the second input policy engine 88 manipulates the received routes and costs in order to influence which routes are used by the first router 1 to a given destination, i.e. to the second network 12. In this example, the second input policy engine 88 passes the processed route and cost information to the second BGP decision processer 90.

The second BGP decision processer 90 determines the best route to a given destination. The second BGP decision processer 90 determines the best route for network traffic received at the first router 1 to take in order to reach the second network 12, i.e. the second BGP decision processer 90 compares the routes to the second network 12 and the associated costs stored in the Adj-RIB-Ins 80, 82 and filtered by the second input policy engine 88, to the route to the second network 12 and the associated cost that the first router 1 itself offers. In this example, the second UPDATE message 42 received from the second router 2 is compared to the third UPDATE message 44 received from the sixth router 6. In this example the cost of the route to the fifth router 5 of the second network 12 offered by the second router 2 has a lesser cost than the route to the sixth router 6 of the second network 12 offered by the first router 1. Thus, the second BGP decision processer 90 determines that the best route to the second network 12 is via the first external link 18. This further best route and its associated cost 95 are passed from the second BGP decision processer 90 to the second Loc-RIB 94, i.e. the prefix used by the second network 12, the next hop identifier identifying the second router 2, and the cost associated with reaching the second network 12 from the second router 2 are sent to the second Loc-RIB 94. Other potential routes to the second network 12 and any associated parameters are sent from the second BGP decision processer 90 to the second route store 92. In this example, the route information contained within the third UPDATE message 44 is sent to the second route store 92. The second BGP decision processer 90 passes all the processed route and cost information to the second back-up system 96.

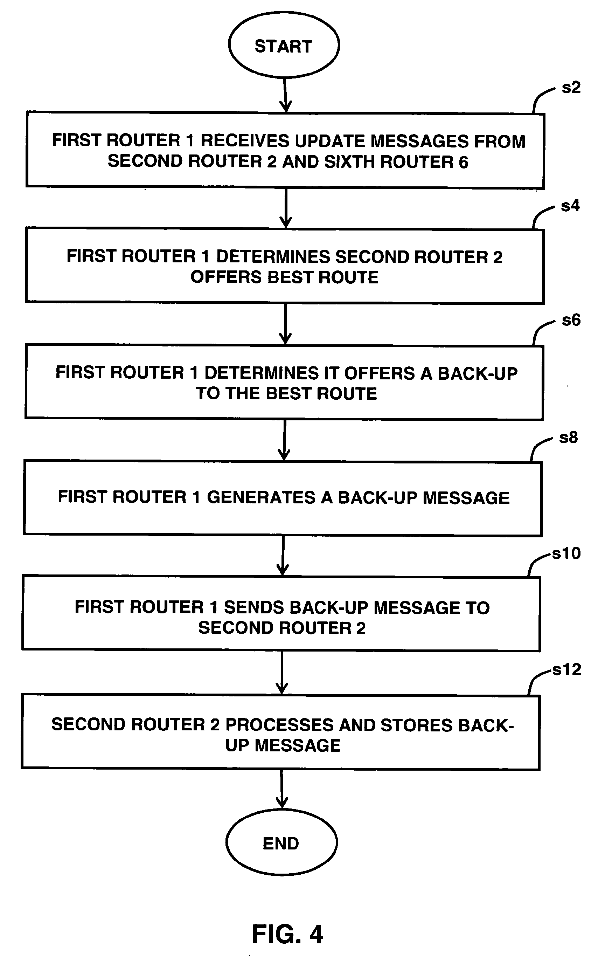

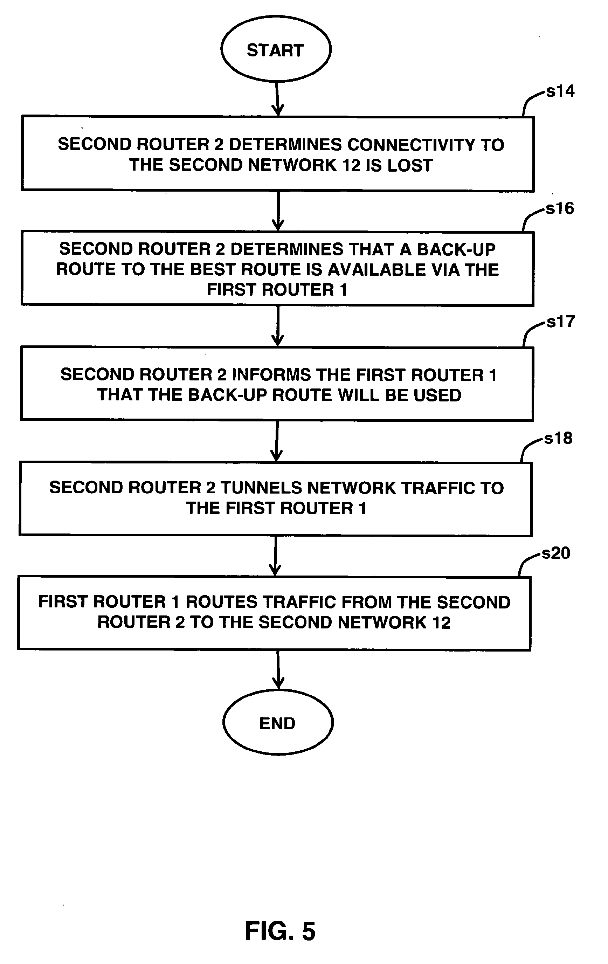

The second back-up system 96 receives all of the processed route information from the second BGP decision processer 90. The second back-up system 96 processes the received information and determines that the first router 1 offers a suitable back-up route to the best route to and from the second network 12. The second back-up system 96 generates a back-up message 97. The back-up message 97 is sent from the first router 1 to the second router 2. In this example, the back-up message 97 is sent from the second back-up system 96 of the first router 1 to the first back-up system 62 of the second router 2. The back-up message 97 sent from the second back-up system 96 of the first router 1 to the first back-up system 62 of the second router 2 is stored by the first back-up system 62 of the second router 2. The first back-up message and its function will be described in greater detail later below, with reference to Figures 4 and 5.

The second Loc-RIB 94 stores the further best route and its associated parameters 95, i.e. the prefix of the second network 12, the next hop identifier and the cost associated with the best route, received from the second BGP decision processer 90. The second Loc-RIB 94 is separate from the second route store 92 and contains all the routes and costs that the first router 1 can advertise to its peers. The second Loc-RIB 94 passes the further best route information 95 to the second output policy engine 98.

The second output policy engine 98 receives the prefix of the second network 52, the next hop identifier and the cost associated with the best route from the second Loc-RIB 94. The second output policy engine 98 applies policies configured by an operator to incoming information. For example, the second output policy engine 98 performs route filtering and attribute manipulation on the received information, i.e. the second output policy engine 98 manipulates the received route and cost in order to, if required, differentiate the information it sends to the peers of the first router 1. In this example, as a result of the processing of the information by the second output policy engine 98, no information is passed to the peers of the first router 1. Thus, no UPDATE messages are passed from the second output policy engine 98 to the fifth, sixth, seventh or eighth Adj-RIB-Outs 100, 102, 104, 106.

The fifth Adj-RIB-Out 100 stores the processed UPDATE information received from the second output policy engine 98 that is to be advertised to the sixth router 6. In this example, there is no UPDATE information to be advertised to the sixth router 6.

The sixth Adj-RIB-Out 102 stores the processed UPDATE information received from the second output policy engine 98 that is to be advertised to the second router 2. In this example, there is no UPDATE information to be advertised to the second router 2.

The seventh Adj-RIB-Out 104 stores the processed UPDATE information received from the second output policy engine 98 that is to be advertised to the third router 3. In this example, there is no UPDATE information to be advertised to the third router 3.

The eighth Adj-RIB-Out 106 stores the processed UPDATE information received from the second output policy engine 98 that is to be advertised to the fourth router 4. In this example, there is no UPDATE information to be advertised to the fourth router 4.

Figures 2 and 3 describe processes taking place in the first and second routers; corresponding processes are taking place in all routers of the first network 10. Thus, the routers 1, 2, 3, 4 reach a state that may be considered to be an equilibrium state. The so-called equilibrium state is a state in which each of the routers 1, 2, 3, 4 of the first network 10 knows the best route to the second network 12.

Further, Figures 2 and 3 in effect provide a view of stages of a back-up message generation and passing process whereby the router via which the best route to the second network 12 from the first network 10 is offered, e.g. the second router 2, is delivered a back-up message 97 from a router offering an alternative route to the prefix advertised by the second network 12, e.g. the first router 1. In this example the second router 2 is delivered a back-up message 97 from the first router 1. This back-up message 97 informs the second router 2 that the first router 1 offers an alternative route to the prefix advertised by the second network 12. The back-up message generation and passing process, stages of which are described above in Figures 2 and 3, is further described with reference to Figure 4 below.

Figure 4 is a process flow chart showing certain steps of an UPDATE message and back-up message passing process.

At step s2, the first router 1 receives the second UPDATE message 42 and the third UPDATE message 44. In this example, the second UPDATE message 42 is received from the second router 2 via the first internal link 22 and the third UPDATE message is received from the sixth router 6 via the second external link 20. In this example, the second UPDATE message 42 comprises the prefix of the second network 12, the next hop identifier identifying the second router 2 as the next hop to the second network 2, and the cost associated with this route. The prefix of the second network 12 and identity of the sending router are stored by the first router 1. In this example, the third UPDATE message 44 comprises the prefix of the second network 12 and the identity of the sending router, i.e. the identity of the sixth router 6. The prefix of the second network and identity of the sending router (the sixth router 6) are stored by the first router 1.

At step s4, the received UPDATE messages 42, 44 are processed by the first router 1, for example, as described above with reference to the first routing system 201 of

Figure 2. The alternative routes to the second network 12 are evaluated against a set of rules. In this example, as mentioned above, the cost of the route to the second network 12 offered by the second router 2 is less than the cost of the route to the second network 12 offered by the first router 1, even if internal network costs are factored in. Thus, the best route to the second network 12 is via the second router 2. This best route and its associated cost are stored in the first routing system 201 of the first router 1.

At step s6, the first router 1 determines that it offers a back-up route to the best route to the second network 12 offered by the second router 2. In this example, the first router 1 offers connectivity to the sixth router 6 of the second network 12 via the second external link 20. This route serves as a back-up to the best route to the fifth router 5 of the second network 12 offered by the second router 2 via the first external link 18.

In this embodiment the first router 1 determines that it offers a back-up route to the best route to the second network 12 offered by the second router 2 by comparing BGP route advertisements. However, in other embodiments, other information, such as that learnt through other protocols or hand entered into the system, is used. For example, a way to identify two routes from a network provider to the same multi-homed customer is to check if two data elements have the same single first network number in a first network path field. Also, a way for a customer network to identify provider routes is to check if two data elements both have a common default route, where the default route is a route to be used if there is no specific information on how to reach a destination. Other options for identifying back-up routes include checking those routes with a common first hop element in the first network path field or comparing reachable prefixes.

At step s8, the first router 1 generates the back-up message 97. The back-up message 97 is generated as a result of determining that the first router 1 offers a back-up route to the best route to the second network 12 offered by the second router 2. In this embodiment the back-up message 97 comprises the identity of the network to which an alternative route is offered, i.e. the identity of the second network 12, the prefixes known to be reachable in that network through the route available to router 1, i.e. the prefix of the sixth router 6, and the identity of the sending router, i.e. the identity of the first router 1. However, in other embodiments the back-up message comprises other appropriate information.

At step s10, the back-up message 97 is sent from the first router 1 to the second router 2. In this example, the back-up message 97 is sent from the first router 1 to the second router 2 via the first internal link 22.

The second router 2 receives the back-up message 97 from the first router 1.

At step s12, the received back-up message 97 is processed by the second router 2. The back-up message 97 is stored by the second router 2, for example, in the first back-up system 62 of the first routing system 201.

Figure 5 is a process flow chart showing certain steps of an example of a process of re-routing network traffic in response to best route connectivity failure. The process utilises the system described above with reference to Figures 1-4 to re-route network traffic from a router offering a best route to a router offering a back-up to the best route, upon detection of a connectivity failure in the best route.

At step s14, it is determined that best route connectivity is lost. In this example, the second router 2 determines that the best route connectivity is lost. In this example, the best route connectivity is lost as a result of the second router 2 of the first network 10 and the fifth router 5 of the second network 12 becoming disconnected. Many mechanisms for detecting such failures in connection are known, for example, mechanisms using link layer information, mechanisms using routing protocol liveness, or explicit failure detection protocols such as Bidirectional Forwarding Detection (BFD).

At step s16, it is determined that a back-up route to the best route is available. In this example, the second router 2 determines that a back-up route via the first router 1 is available. The second router 2 determines that a back-up route to the best route is available by reading out the back-up message 97 stored in the first back-up system 62 of its first routing system 201, as described above with reference to Figures 2 and 3. The second router 2 learns from the back-up message 97 stored in the first back-up system 62 that a back-up route to the failed best route is available, and moreover that the back-up route is provided by the first router 1.

At step s17, the second router 2 sends a message to the first router 1 informing the first router 1 that the back-up route will be used to route network traffic destined for the second network 12. This will avoid the first router 1 returning network traffic to the second router 2. In this embodiment the message is an out-of-band explicit message. However, in other embodiments the message may be in-band, and also may be implicit, i.e. the message may be in-band or out-of-band, and may be explicit or implicit. The use in this embodiment of an out-of-band explicit message (or signal) is advantageously simple, reliable, extendable and secure. For example, the out-of-band explicit message (or signal) may be extended to include congestion information. In yet further embodiments the information that the back-up route is being used and/or that the network traffic should not be returned to the second router 2 may be included with the rerouted network traffic itself instead of or in addition to this information being contained in the message described earlier in this paragraph. Also, in other embodiments the first router 1 is not specifically informed that the back-up route is to be/is being used.

At step s18, the second router 2 forwards network traffic to the first router 1. In this embodiment, this is done by tunnelling the network traffic from the second router 2 to the first router 1. The second router 2 tunnels, to the first router 1, network traffic destined for the second network 12 that would have been routed to the fifth router 5 of the second network 12 via the first external link 18 if connectivity between the second router 2 and the fifth router 5 had not been lost. The second router 2 tunnels network traffic destined for the second network 12 to the first router 1 so that the network traffic can be routed to the second network 12 by the first router 1 via the back-up route, i.e. to the sixth router 6 of the second network 12 via the second external link 20.

At step s20, the first router 1 routes the tunnelled network traffic received from the second router 2 to the second network 12. At this stage the traffic may no longer be in any tunnel.

Thus, the above described system and method provides for fast recovery from the failure of inter-domain links. The above described system and method provides for the quick restoration of connectivity in the presence of a link failure between a network provider and a multi-homed site. The above described system and method provides for the quick switching to the back-up route by involving the storage and processing capabilities of a minimum number of nodes. Also, no additional networking technologies are needed by the above system to provide fast recovery from the failure of inter-domain links.

The above described system and method is able to detect the existence of back-up routes in a network. The above described system and method is able to ensure that information regarding the back-up routes is distributed to facilitate a fast response to a failure. The above described system and method is able to co-ordinate the use of the back-up routes on detection of a failure.

The above described system and method can be separate to the system and method of BGP routing. An advantage of the above described system and method being separate to the system and method of BGP routing is that, whereas with the BGP methodology each BGP speaking router within a network is required to process all the routing information sent to it from all the other BGP speaking routers in the network, in the above described system and method back-up information is propagated only to the routers that are directly involved in the event of the back-up being used, i.e. the router offering the back-up route and the router that the back-up protects.

A further advantage of the above described system and method being separate to the system and method of BGP routing is that the amount of work that needs to be performed by the routers themselves tends to be minimised. Since many routers are processor or memory limited, this tends to be beneficial to deployment of the above described system and method.

A further advantage of the above described system as being separate from BGP and relying on explicit out of band messaging occurs when the system is operating to provide multi-homing support to a network which uses two different networks to provide their greater connectivity. It is then possible to run security checks between all involved parties which can reduce the possibility of denial of service attacks.

In the above embodiments the inter-network comprises a single first network coupled to a single second network. However, in other embodiments the inter-network comprises any number of first networks, coupled to any number of second networks. Also, in other embodiments, some or all of the any number of first networks may be coupled together. Also, in other embodiments, some or all of the any number of second networks may be coupled together.

In the above embodiments the first network comprises four routers, namely a first router 1, a second router 2, a third router 3, and a fourth router 4. However, in other embodiments the network comprises any number of routers.

In the above embodiments, the first router of the first network is connected to a single router of the second network, and the second router of the first network is also connected to a single (different) router of the second network. However, in other embodiments any number of routers of the first network may be connected to any number of routers of the second network. Moreover, in other embodiments multiple routers of the first network may be connected to a single router of the second network and/or multiple routers of the second network may be connected to a single router of the first network.

In the above embodiments, a back-up route from the first network to the second network directly connects a router of the first network to a router of the second network. However, in other embodiments the back-up route is via a different network, for example a third network. In other embodiments the back-up route is via a series of networks.

In the above embodiments the routers within a network are connected to each other by means of OSPF processes. However, in other embodiments, the routers of the network are connected via different means, for example, by direct connections.

In the above embodiments the routers of the first network are connected via iBGP links. However, in other embodiments, routers of the first network are connected via different protocols.

In the above embodiments the routers of the first network are connected to those of the second network via eBGP links. However, in other embodiments, the routers of the first network are connected to those of the second network via different links.

In the above embodiments the cost associated with the links connecting the routers may reflect, amongst other things, the cost or bandwidth of the link or the AS path to be traversed. However, in other embodiments the associated cost is a different attribute, for example, a user specified metric, or an indication of the time taken to traverse a route, or any combination or function of these or other costs or resources.

In the above embodiments the first routing system of the first router comprises various entities as described. However, in other embodiments the first routing system comprises different entities that provide the same functionality.

In the above embodiments the second routing system of the second router comprises various entities as described. However, in other embodiments the second routing system comprises different entities that provide the same functionality.

In the above embodiments a back-up message is generated by a back-up message generator within a routing system. However, in other embodiments the back-up message is generated by different means, for example different means that are either internal or external to the routing system or router.

In the above embodiments, a BGP decision processor passes a back-up message to a back-up system. However, in other embodiments the back-up message is passed to the back-up system from a different entity, or the back-up information is obtained passively from an independent system reading the routing tables.

In the above embodiments, a back-up message is stored in a back-up system within a routing system. However, in other embodiments the back-up message is stored in a different entity such as a forwarding table. Also, in other embodiments the back-up message is stored externally of the routing system.

In the above embodiments, a back-up message is used to indicate the existence of a back-up route and identify the router(s) offering the back-up route. However, in other embodiments, different identifiers are used to indicate and identify back-up routes and their attributes. For example, the back-up message may additionally comprise a "back-up route cost" indicating the cost associated with using the indicated back-up route. The back-up route cost may be advantageously used to identify the lowest cost back-up to a best route and ensure that the lowest cost back-up routes are maintained in a back-up system of a routing table.

In the above embodiments, the second router determines that best route connectivity is lost. However, in other embodiments, it is determined that best route connectivity is lost by different means. Also, in other embodiments best route connectivity is not lost, for example, the system may use a back-up route in response to congestion events. Such events may be considered as partial failures. In other embodiments, the back-up system protects against soft failures, such as excessive packet loss due to steady state congestion.

In the above embodiments, the second router tunnels all network traffic destined to the second network to the first router in response to a connectivity failure. However, in other embodiments, the second router re-directs only a proportion of its traffic to the back-up route. This may be particularly advantageous when the back-up route is used in the case of a partial or soft failure, as described in the preceding paragraph. In this case, a bidirectional signal between the protected and protecting routers may be used. This bidirectional signal 'asks and confirms' rather than commands that the back-up route is used. This is a form of dynamic load balancing which advantageously provides that manually adjusting routing policies until a correct balance is achieved is not necessary.

In the above embodiments, the first router is made aware that the back-up route should be used by the second router sending an out-of-band explicit message to the first router 1. However, in other embodiments the message is of a different type, for example, the message may be in-band or out-of-band, and may be explicit or implicit. An example in-band explicit signal uses a specific code point which indicates that the traffic belongs to the "back-up class". An example implicit signal determines that traffic was actually tunnelled to the first router from a source corresponding to the second router. An out-of-band explicit signal is advantageously simple, reliable and secure.

In the above embodiments a back-up route is implemented following the failure of a best route. However, in other embodiments both links are used simultaneously, for example, with routing policies configured to achieve a level of load balancing across the links.

In the above embodiments a single back-up route is maintained by the system. However, in other embodiments single or multiple protection routes are maintained by the system. If multiple back-up routes are maintained, a preferred protection route may be chosen, for example, by considering one or more quality of service metrics, such as link reliability or available bandwidth. The failure detection part of the system is well placed to record information on link reliability.

In the above embodiments a back-up route is implemented following the failure of a best route. However, in other embodiments the system may also be used to monitor network performance in identifying for example repeatedly failing or congested links (otherwise known as flapping links). An advantage of such a system is that it tends to allow identification of hardware problems. A further advantage of such a system is that it tends to eliminate or reduce the need to monitor BGP messages to detect such problems.

In the above embodiments the system is capable of rerouting network traffic flowing out of the first network. However, in other embodiments the system is capable of rerouting inbound network traffic. An example system provides full multi-homing solution such that both the autonomous and second networks offer the capabilities described above. A network provider running such a system would tend to offer a dynamic in-bound load balancing service, which is difficult to achieve with standard BGP policy control.

In the above embodiments, the system of a router chooses a single best path and identifies a single possible back-up route. However, in other embodiments, multiple links are used to forward traffic to a specific destination. Also, in other embodiments a router knows of more than one back-up route to a single destination.

In the above embodiments the networks communicate using the BGP protocol. However, in other embodiments the networks communicate using other protocols. In other embodiments, the networks do not share full topology information (such networks may include OSPF areas or layer 2 networks). Also, in other embodiments static configuration is used between the networks.

In the above embodiments the external links connecting the two networks are essentially point to point between the gateway routers. However, in other embodiments a different topology is used. For example, in other embodiments a topology wherein multiple networks are connected through a shared network infrastructure at an internet exchange point is used. In other embodiments, switching or bridging devices exist between the routers.

In the above embodiments all routers in both networks chose a single link to reach a destination. However, in other embodiments, both links remain active with different routers choosing one or other of the links to reach the destination.

In the above embodiments, messages between routers appear in a specific order. However, in other embodiments the messages appear in a different specific order. In other embodiments, the message order is not specific. Also, some messages may overlap to some extent temporarily.

In the above embodiments, the first router, the second router, the third router, and the fourth router are configured in a full mesh of iBGP protocol sessions, i.e. each router is configured to act as a peer to every other router. However, in other embodiments, different mechanisms are used to reduce the need for a full mesh, for example, in other embodiments route reflectors, which act as proxies for a set of routers, are used.

In the above embodiments, traffic is sent from the first network to the second network via either the first external link or the second external link. However, in other embodiments, both external links are in service simultaneously.

In the above embodiments, the first router determines that it offers a back up route. However, in other embodiments, a different device determines that it offers a back-up route. In other embodiments, a different device determines that a back-up route is offered. For example, in other embodiments a route reflector determines that a back-up route is offered.

In further embodiments, one or more of the routers involved in implementing a back-up route due to a failure reports this event to a management system or other appropriate entity. This reporting may be implemented by the router providing the back-up route, or by the router being assisted by the back-up route, or by both these routers. This avoids or alleviates the need for e.g. BGP messages to be monitored to detect problems as is carried out conventionally, or at least may offer a quicker identification of a problem even if conventional monitoring is being carried out.

In the above embodiments, the inter-network is described as being interconnected with routers and the routers implement the above described back-up route determination and back-up route use processes. However, in other embodiments the inter-network is connected with different appropriate devices, for example switches, or a combination of switches and routers, and these devices implement the above described back-up route determination and back-up route use processes.

## Claims

1. A method performed in a first network (10), the first network (10) comprising a first network device (1) and a second network device (2), the first network (10) being at least initially linked to a second network (12) by a first link (18) that is available between the second network device (2) and the second network (12), the first link (18) providing a chosen route between the first network (10) and the second network (12); the method comprising:
determining that the first network device (1) offers a back-up route between the first network (10) and the second network (12) via a second link (20) that is available between the first network device (1) and the second network (12).

2. A method according to claim 1, wherein the step of determining that the first network device (1) offers a back-up route is performed by the first network device (1) itself,

3. A method according to claim 1 or 2, the method further comprising:
the first network device (1) generating a back-up message (97) indicating that it offers the back-up route; and
the first network device (1) sending the back-up message (97) to the second network device (2).

4. A method according to claim 3, further comprising the second network device (2) storing the indication of the offered back-up route to provide a stored back-up route.

5. A method according to claim 4, the method further comprising:
the second network device (2) determining that a route in addition to or instead of the chosen route is required;
the second network device (2) determining that the stored back-up route can fulfil this requirement; and
in response to the step of determining that the stored back-up route can fulfil the requirement, the second network device (2) directing network traffic between the first network (10) and the second network (12) via the first network device (1).

6. A method according to claim 5, further comprising sending a message from the second network device (2) to the first network device (1) informing the first network device (1) that the back-up route is to be used.

7. A method according to claim 5 or 6, wherein the step of directing network traffic between the first network (10) and the second network (12) via the first network device (1) comprises tunnelling the network traffic between the second network device (2) and the first network device (1).

8. A method according to any of claims 3 to 7, wherein the process of sending the back-up message (97) from the first network device (1) to the second network device (2) is carried out independently of any network traffic passing processes being implemented by the first network device (1) and the second network device (2).

9. A method according to any of claims 1 to 8, wherein network traffic passing processes are implemented by the first network device (1) and the second network device (2) using the Border Gateway Protocol, BGP.

10. A method according to any of claims 1 to 9, wherein the first network (10) comprises at least one further network device (3, 4) in addition to the first network device (1) and the second network device (2), and no network devices of the first network (10) apart from the first network device (1) and the second network device (2) are informed that the first network device (1) offers a back-up route for the second network device (2).

11. A method performed by a first network device (1), the first network device (1) being part of a first network (10) that further comprises a second network device (2), the first network (10) being at least initially linked to a second network (12) by a first link (18) that is available between the second network device (2) and the second network (12), the first link (18) providing a chosen route between the first network (10) and the second network (12); the method comprising:
the first network device (1) determining that the first network device (1) offers a back-up route between the first network (10) and the second network (12) via a second link (20) that is available between the first network device (1) and the second network (12).

12. A method performed by a second network device (2), the second network device (2) being part of a first network (10) that further comprises a first network device (1), the first network (10) being at least initially linked to a second network (12) by a first link (18) that is available between the second network device (2) and the second network (12), the first link (18) providing a chosen route between the first network (10) and the second network (12); the method comprising:
the second network device (2) storing an indication of an offered back-up route to provide a stored back-up route in response to receiving, from the first network device (1), a back-up message (97) indicating that the first network device (1) offers the back-up route between the first network (10) and the second network (12) via a second link (20) that is available between the first network device (1) and the second network (12).

13. A first network device (1) for use in a first network (10), the first network (10) further comprising a second network device (2) and being at least initially linked to a second network (12) by a first link (18) that is available between the second network device (2) and the second network (12), the first link (18) providing a chosen route between the first network (10) and the second network (12);
the first network device (1) comprising means for determining that the first network device (1) offers a back-up route between the first network (10) and the second network (12) via a second link (20) that is available between the first network device (1) and the second network (12).

14. A second network device (2) for use in a first network (10), the first network (10) further comprising a first network device (1) and being at least initially linked to a second network (12) by a first link (18) that is available between the second network device (2) and the second network (12), the first link (18) providing a chosen route between the first network (10) and the second network (12);
the second network device (2) comprising means for storing an indication of an offered back-up route to provide a stored back-up route in response to receiving, from the first network device (1), a back-up message (97) indicating that the first network device (1) offers the back-up route between the first network (10) and the second network (12) via a second link (20) that is available between the first network device (1) and the second network (12).

15. A first network (10), comprising:
a first network device (1) according to claim 13; and
a second network device (2) according to claim 14.
